(19) Europäisches Patentamt
European Patent Office
Office européen des brevets

(11) **EP 2 430 481 B1**

(12) **EUROPEAN PATENT SPECIFICATION**

(45) Date of publication and mention
of the grant of the patent:
**22.07.2015 Bulletin 2015/30**

(51) Int Cl.:
*G01V 7/06* (2006.01)

(21) Application number: **09785220.6**

(22) Date of filing: **15.05.2009**

(86) International application number:
**PCT/GB2009/050527**

(87) International publication number:
**WO 2010/130967 (18.11.2010 Gazette 2010/46)**

(54) **GEOPHYSICAL DATA PROCESSING SYSTEMS**

SYSTEME ZUR VERARBEITUNG VON GEOPHYSIKALISCHEN DATEN

SYSTÈMES DE TRAITEMENT DE DONNÉES GÉOPHYSIQUES

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**21.03.2012 Bulletin 2012/12**

(73) Proprietor: **Arkex Limited
Cambridgeshire CB4 0WZ (GB)**

(72) Inventor: **BARNES, Gary
Cambridgeshire CB4 OWZ (GB)**

(74) Representative: **Gwilt, Julia Louise
Marks & Clerk LLP
62-68 Hills Road
Cambridge
CB2 1LA (GB)**

(56) References cited:
**WO-A2-2008/117081    WO-A2-2009/016348
US-B1- 6 502 037**

• PILKINGTON M., COWAN D.R.: "Model-based
separation filtering of magnetic data"
GEOPHYSICS, SEG, vol. 71, no. 2, 1 March 2006
(2006-03-01), pages L17-L23, XP001241086
• PAWLOWSKI R.S.: "Preferential continuation for
potential-field anomaly enhancement"
GEOPHYSICS, SEG, vol. 60, no. 2, March 1995
(1995-03), - April 1995 (1995-04) pages 390-398,
XP002569237
• PAWLOWSKI R.S., HANSEN R.O.: "Gravity
anomaly separation by Wiener filtering"
GEOPHYSICS, SEG, vol. 55, no. 5, May 1990
(1990-05), pages 539-548, XP002569238

**Description**

FIELD OF THE INVENTION

This invention relates to methods, apparatus, and computer program code for processing geophysical data, more particularly gravity data and gravity gradiometer data from a potential field survey to provide a representation of the underlying geology of the surveyed region. Embodiments of the techniques we describe are particularly useful for processing data from airborne surveys, in particular gravity field surveys.

BACKGROUND TO THE INVENTION

A potential field survey is performed by measuring potential field data which, for a gravity survey, may comprise one or more of gravimeter data (measuring gravity field) or gravity gradiometer data (measuring gravity field gradient), vector magnetometer data, true magnetic gradiometer data, and other types of data well-known to those skilled in the art. A common aim of a geophysical potential field survey is to search for signatures which potentially indicate valuable deposits such as minerals or hydrocarbons.

The goal of most potential field surveys is to deduce the sub-surface geology. It is well known to the geophysics industry that the high spatial frequency potential field signals are dominated by near surface anomalies. Further, in most situations, the terrain and the near surface geology also give rise to substantial low spatial frequency signals. In general, the low frequency signals from the near surface anomalies are extremely hard to distinguish from the low frequency signals coming from deeper geology. Accordingly, it is possible to postulate a geology having only a near surface mass distribution which matches the measured signal implying that there are no anomalies left in the measured signal coming from deep geologies. Fortunately most such mass distributions can be ruled out using a range of tools including geological knowledge, known typical density distributions, prior information, similar known structures elsewhere in the world etc.

It is known that gravity data is affected by high-frequency noise originating from movement of a platform on which the gravimeter is placed. Low-pass filters are often applied to remove such motion-related noise. However, the filtering does not discriminate between signal and noise and removes both from frequencies outside the pass band. If this is not taken into account, interpretation of the data from such filtered gravimeters produces source bodies which are deeper and wider than the true sources. This problem is discussed in "Effects of data filtering on inversion of gravity gradient data" by Lee et al, SEG 75th Annual Exposition and Annual Meeting 6-11 November 2005, Houston Texas. The paper suggests incorporating filtering into the inversion process to improve results.

There remains a need, however, for improved techniques for processing geophysical data from such surveys in order to identify the underlying geology.

SUMMARY OF THE INVENTION

According to a first aspect of the invention there is provided a method as set out in claim 1.

We also describe a method of processing geophysical data including at least measured potential field data from a potential field survey of a surveyed region of the earth to provide a representation of the geology of said surveyed region, the method comprising:

inputting a first and a second set of measured potential field data wherein at least said first set of measured potential field data is filtered data; and

generating a model of said surveyed region by predicting a first set of data and a second set of data corresponding to said first and second sets of measured potential field data;

filtering said first set of predicted data, wherein said filtering matches the filtering applied to the first set of measured data and

fitting said first set of filtered predicted data and said second set of predicted data to said first and second sets of measured data, respectively.

Both sets of data may be input to the system from the same measuring instrument or may be measured separately and input for subsequent processing together. The second set of measured potential field data may also be filtered data and the generating step may include filtering said second set of predicted data and fitting said second set of filtered predicted data to said second set of filtered measured data. If the second set of data is filtered, the filtering is preferably different to that applied to the first set of data. The method may further comprise input additional sets of measured data. In this case, the model may be generated by filtering the predicted data if the corresponding measured data is filtered data and fitting the additional sets of predicted data (whether filtered or unfiltered) to the corresponding additional sets of measured data.

Incorporating the filtering into the model generation process allows the solution to correctly focus on the relevant parts of each of the data sets' spectra. In other words, the different sets of data are combined in an optimal way. Thus, information that may have been lost in one set of data (e.g. due to noise levels at certain frequencies) is made up by another set whose measurements are unfiltered or are filtered over a different bandwidth.

The second set of measured potential field data may be gravity gradient data and/or said first set of filtered measured potential field data may be gravity data. The gravity gradient data and the gravity data may be measured with the same measuring instrument or with a separate gravimeter and a separate gradiometer. As explained above, typically gravity data is heavily filtered. By contrast, gravity gradient data is essentially unfiltered. By using the above method, gravity and gravity gradient data may be combined in a way that correctly accounts for the filtering applied to the measured data. As a result, better results over a wider bandwidth should be obtainable. Furthermore, the above method allows the gravity and gravity gradient measurements to be made simultaneously and subsequently processed together.

The method may comprise filtering the predicted data (i.e. the first set of data alone or both sets of data if the second set of measured data is also filtered) in the time domain. In this way, noisy parts of the spectrum may be removed to minimise corruption of the model generation process. For measured data which is noisy at high frequencies, e.g. airborne gravity data, the filtering may use a low pass filter, e.g. with a cut-off frequency of 3.5mHz. Alternatively, different types of filter may be used to match the filtering applied to the measured data.

The predicted data may be filtered by applying a weight to each element in the data set.

The weighting step may generate the effect of a low pass filter on the first set of predicted data and may leave the second set of predicted data unchanged, e.g. if said second set of measured potential field data is gravity gradient data and if said first set of filtered measured potential field data is gravity data. Alternatively, the weighting may generate the effect of a filter, preferably different types of filter, on both sets of predicted data.

The weight for each element may be calculated based on a time characteristic of the filter and a time difference between measurement of a pair of elements in the data set. In other words, each measurement may be weighted by frequency.

The model generating step may further comprise regularisation which may be of any standard form, e.g. Tikhonov and gradient regularisation.

The model generating step may comprise any known fitting step, e.g. equivalent source minimisation, in which there is minimisation of the error between the measured data and the predicted data generated by the equivalent source model. The minimisation may use standard optimisation algorithms such as the conjugate gradient method or Monte Carlo methods.

We also describe a method of processing geophysical data including at least measured potential field data from a potential field survey of a surveyed region of the earth to provide a representation of the geology of said surveyed region, the method comprising:

inputting a first and a second set of measured potential field data wherein at least said first set of measured potential field data is filtered data; and
generating a model of said surveyed region using equivalent source minimisation with filtering applied to predicted data corresponding to said first set of measured potential field data.

According to another aspect of the invention, there is provided a system as set out in claim 11

Said means for measuring said first set of measured potential field data and said means for measuring said second set of measured potential field data may be incorporated in a single instrument which may be mounted on a common platform. Thus, the system may comprise a measuring instrument which incorporates said means for measuring said first set of measured potential field data and said means for measuring said second set of measured potential field data. Alternatively, two separate measuring devices may be used. For example, said means for measuring said first set of measured potential field data may be a gradiometer for measuring gravity data. Said means for measuring said second set of measured potential field data may be a gravimeter for measuring gravity gradient data.

In embodiments, in particular where the field comprises a gravity field, the analysis to generate a model comprises identifying spatial features by identifying one or more of maxima, minima and points/lines of inflection in the filtered or residual potential field data. Thus, for example, with the gravity gradient tensor the on-diagonal components $G_{xx}$, $G_{yy}$, and $G_{zz}$, (which are differential signals) are interpreted to determine inflection points or changes in slope since these generally correspond to geologically significant features of the surveyed region such as an interface between two different types/densities of rock. For off-diagonal components, in particular $G_{zx}$ and $G_{zy}$ (which emphasise symmetries in the x- and y- direction respectively, maxima and/or minima are preferably identified; for $G_{xy}$ points are preferably identified by locating pairs of dipoles since these tend to identify corners of a subterranean body. Off-diagonal elements $G_{zi}$ (where i is x or y) tend to emphasise symmetries in the i-direction. On-diagonal components $G_{xx}$ and $G_{yy}$ are always zero along respective axis x and y of the source and since the choice of axis is often arbitrary, optionally the co-ordinates system may be rotated about one or more axis to potentially identify further geologically useful information. In embodiments the co-ordinate axis may be selected to maximise the apparent useful geological information. Similarly magnetic data may be processed to identify maximum/minimum inflection points/lines.

Referring again to the above-mentioned maxima, minima and lines of inflection, multiple sets of spatial features may be identified for the filtered or residual potential field data, for example from different vector or tensor components of a surveyed gravity field, magnetic field or gravity gradient field and/or from survey data other than from a potential field survey. Other survey data which may be combined with the data obtained from a potential field survey includes (but is not limited to): topographic information, for example determined by lidar, spectral or more preferably hyperspectral imagery, gas saturation data, chemical analysis data (from soil sampling), and other soil survey data.

The potential field survey may be conducted from a moving platform such as an aircraft.

The invention also provides a method of prospecting for oil or a mineral from the earth, the method including conducting a potential field survey according to an aspect or embodiment of the invention as described above to generate a representation of the underlying geology of the surveyed region, and then using this representation to locate the desired oil or mineral. A further aspect of the invention also provides oil or mineral extracted using this technique.

The invention further provides processor control code to implement the above-described methods, in particular on a data carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code, code for setting up or controlling an ASIC (Application Specific Integrated Circuit) or FPGA (Field Programmable Gate Array), or code for a hardware description language such as Verilog (Trade Mark) or VHDL (Very high speed integrated circuit Hardware Description Language). As the skilled person will appreciate such code and/or data may be distributed between a plurality of coupled components in communication with one another, for example distributed across a network.

We also describe a data processing system configured to implement embodiments of the above-described methods, to determine one or more parameters relating to physical properties of the Earth's interior from processed geophysical data. Such a data processing system may comprise: data memory for storing measured potential field data and plot data for representing the underlying geology of the surveyed region, program memory storing processor control code as described above; and a processor coupled to said data memory and to said program memory to load and implement said control code.

BRIEF DESCRIPTION OF THE DRAWINGS

These and other aspects of the invention will now be further described, by way of example only, with reference to the accompanying figures in which:

Figure 1 shows an aircraft with flight survey data, and an example of a data processing system configured to implement an embodiment of a method according to the invention;

Figure 2a shows the signal to noise ratio (SNR) along a survey line (60m/s) flying over a wide bandwidth geological model for both gravity gradient Gzz and gravity gz;

Figure 2b shows the power spectral density (PSD) impulse response (from a point source) as a function of spatial frequency for both gravity gradient Gzz and gravity gz;

Figure 3 is a flowchart of the methodology used;

Figure 4a is an illustration of a synthetic model having dimensions 150 x 150 km used to test the methodology of Figure 3;

Figure 4b shows the gravity measurements to be expected from the model of Figure 4a;

Figure 5a shows the error distribution in the predicted gravity when calculated from an equivalent source model using only gravity gradient simulated measurements;

Figure 5b shows the error distribution in the predicted gravity when calculated using both gravity gradient and gravity data;

Figure 6a is a cross-section construction of a gradiometer along one axis;

Figure 6b is a circuit diagram for the gradiometer of Figure 6a.

DETAILED DESCRIPTION OF DRAWINGS

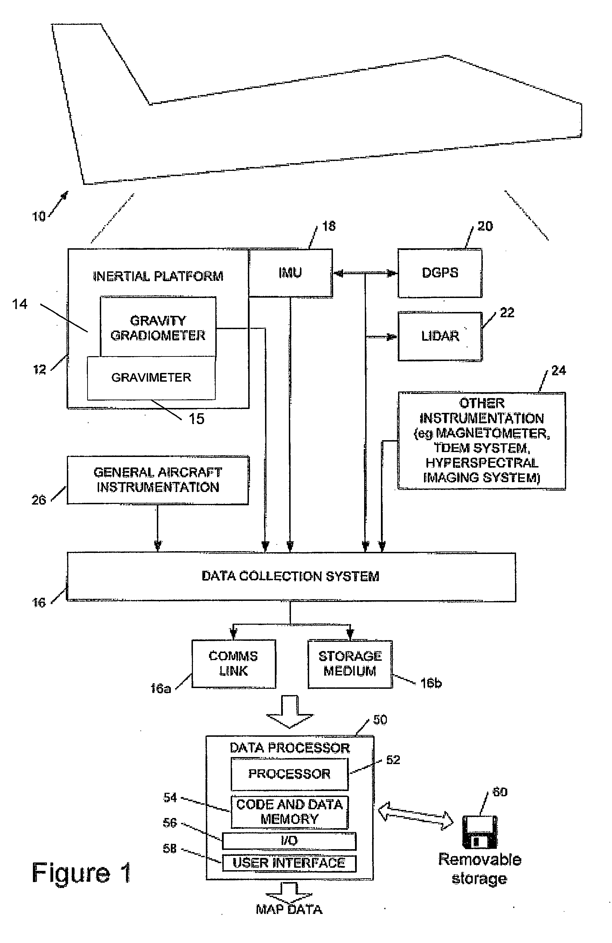

Figure 1 shows an example of an aircraft 10 for conducting a potential field survey to obtain data for processing in accordance with a method as described below. The aircraft 10 comprises an inertial platform 12 on which is mounted a gravity gradiometer 14 and a gravimeter 15 which both provide potential field survey data to a data collection system 16. Alternatively, the functionality of the gravimeter and gravity gradiometer may be incorporated into a single measuring instrument which is configured to measure both gravity and gravity gradiometry.

The inertial platform 14 is fitted with an inertial measurement unit (IMU) 18 which also provides data to data collection system 16 typically comprising attitude data (for example, pitch, roll and yaw data), angular rate and angular acceleration data, and aircraft acceleration data. The aircraft is also equipped with a differential GPS system 20 and a LIDAR system 22 or similar to provide data on the height of the aircraft above the underlying terrain. The aircraft 10 may also be equipped with other instrumentation 24 such as a magnetometer, TDEM system and/or hyperspectral imaging system, again feeding into the data collection system. The data collection system 16 also has an input from general aircraft instrumentation 26 which may comprise, for example, an altimeter, air and/or ground speed data and the like. The data collection system 16 may provide some initial data pre-processing, for example to correct the LIDAR data for aircraft motion and/or to combine data from the IMU 18 and DGPS 20. The data collection system 16 may be provided with a communications link 16a and/or nonvolatile storage 16b to enable the collected potential field and position data to be stored for later processing. A network interface (not shown) may also be provided.

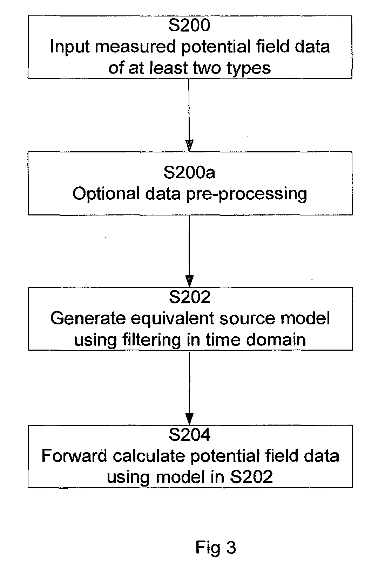

Data processing to generate map data for the potential field survey is generally (but not necessarily) carried out offline, sometimes in a different country to that where the survey data was collected. As illustrated a data processing system 50 comprises a processor 52 coupled to code and data memory 54, an input/output system 56 (for example comprising interfaces for a network and/or storage media and/or other communications), and to a user interface 58 for example comprising a keyboard and/or mouse. The code and/or data stored in memory 54 may be provided on a removable storage medium 60. In operation the data includes data collected from the potential field survey and the code comprises code to process this data to generate map data, for example in accordance with the procedure shown in Figure 3, described below.

Consider an airborne potential field survey such as a gravity survey, flown on a grid pattern defined by orthogonal sets of parallel lines (flight paths) on a two-dimensional surface which is draped over the underlying terrain. When looking for underlying anomalies the nearby mass has a dominating effect and to provide an accurate representation of deep features a good representation of surface features is desirable so as to be able to perform terrain correction by subtracting-off particularly the higher frequencies (which dominate the power spectrum). A signal with wavelength $\lambda$ falls off with height z as *exp(-kz)* where $k = 2\pi/\lambda$ (from which it can be seen that longer wavelengths are less attenuated) and the wavelength scale corresponds to a signature expected given a target's size and depth.

For gravity, the relevant potential is the gravity scalar potential, $\Phi(r)$, defined as

$$\Phi(r) = \iiint \frac{G\rho(r')}{|r - r'|} d^3 r'$$

where $r$, $\rho(r')$, $G$ are respectively, the position of measurement of the gravity field, the mass density at location r', and the gravitational constant. The gravitational acceleration, which is how a gravitational field is experienced, is the spatial derivative of the scalar potential. Gravity is a vector in that it has directionality. It is represented by three components with respect to any chosen Cartesian coordinate system as:

$$g = \left(g_x, g_y, g_z\right) = \left(\frac{\partial \Phi(r)}{\partial x}, \frac{\partial \Phi(r)}{\partial y}, \frac{\partial \Phi(r)}{\partial z}\right)$$

Each of these three components varies in each of the three directions and the nine quantities so generated form the Gravity gradient tensor:

$$G = \begin{pmatrix} G_{xx} & G_{xy} & G_{xz} \\ G_{yx} & G_{yy} & G_{yz} \\ G_{zx} & G_{zy} & G_{zz} \end{pmatrix} = \begin{pmatrix} \dfrac{\partial}{\partial x}\dfrac{\partial \Phi(r)}{\partial x} & \dfrac{\partial}{\partial x}\dfrac{\partial \Phi(r)}{\partial y} & \dfrac{\partial}{\partial x}\dfrac{\partial \Phi(r)}{\partial z} \\ \dfrac{\partial}{\partial y}\dfrac{\partial \Phi(r)}{\partial x} & \dfrac{\partial}{\partial y}\dfrac{\partial \Phi(r)}{\partial y} & \dfrac{\partial}{\partial y}\dfrac{\partial \Phi(r)}{\partial z} \\ \dfrac{\partial}{\partial z}\dfrac{\partial \Phi(r)}{\partial x} & \dfrac{\partial}{\partial z}\dfrac{\partial \Phi(r)}{\partial y} & \dfrac{\partial}{\partial z}\dfrac{\partial \Phi(r)}{\partial z} \end{pmatrix}$$

Although there appear to be nine components of the gravity gradient tensor, there are only five independent components. Firstly, the tensor is symmetric as the order of differentiation of a scalar quantity does not matter (implying that $G_{xy} = G_{yx}$). Secondly, outside of the source, the sum of the diagonal terms equals zero (Laplace's equation). The ability to measure several spatially independent gravity components has obvious advantages over conventional gravity measurements, which only recovers the vertical component ($G_z$)

There is a relationship between the depth (and shape) of a buried object and the wavelength (and amplitude) of the detected signal. In general, a measured quantity - say a component of the gravity vector or of the gravity gradient tensor will be a summation of the form shown below. Here we use gg as notation for the measured quantity, for example $G_{zz}$.

$$gg_{calculated}(r_{measure}) = \sum_{all-masses} m_{mass-element} F(r_{measure} - r_{mass-element})$$

In the above equation F is called a Greens function (see for example, R.J. Blakely, "Potential Theory in Gravity and Magnetic Applications", Cambridge University Press, 1995, at page 185, incorporated by reference) and $r_{mass-element}$ defines the location of the mass element (for example the centre of mass or some other defined point).

The functions F are standard functions, essentially, the influence a source (mass element) of unity mass or density and defined shape would have at the relevant (measurement) point. The source may be a point source, sphere or ellipsoid but, in practice is more often a prism, which may be irregular. For example, if the presence of a particular geological layer or, say, geological anomaly, e.g. a kimberlite pipe, is suspected a shape can be defined to take account of this. A number of textbooks list Greens functions for simple shapes; functions for more complex source geometries can be found in the literature. Also the source influence superposes so that if a complex shape can be discretised into a plurality of simpler shapes then the Greens functions for the discrete shapes can be added together. This in principle allows numerical values for the Greens function of any arbitrary shape to be determined, although in practice relatively simple shapes are generally preferable. By way of example, the Green's function F for a rectangular prism (Blakely, *ibid,* at page 187), has 8 terms each of which corresponds to a vertex of the prism.

Airborne gravity gradiometry data is known to be of much higher resolution than conventional gravity data. This arises firstly because the power in the gradient signal is concentrated at higher spatial frequencies and secondly since the gradiometer, being a differencing instrument, is less sensitive to aircraft motion. The latter negating the need for heavy filtering of the data to suppress noise. Airborne gravimeters, intrinsically sensitive to aircraft motion, depend on filtering to reduce the noise to an acceptable level. Ultimately, the resolution of processed airborne gravity data is limited by the accuracy in which GPS derived acceleration corrections can be applied.

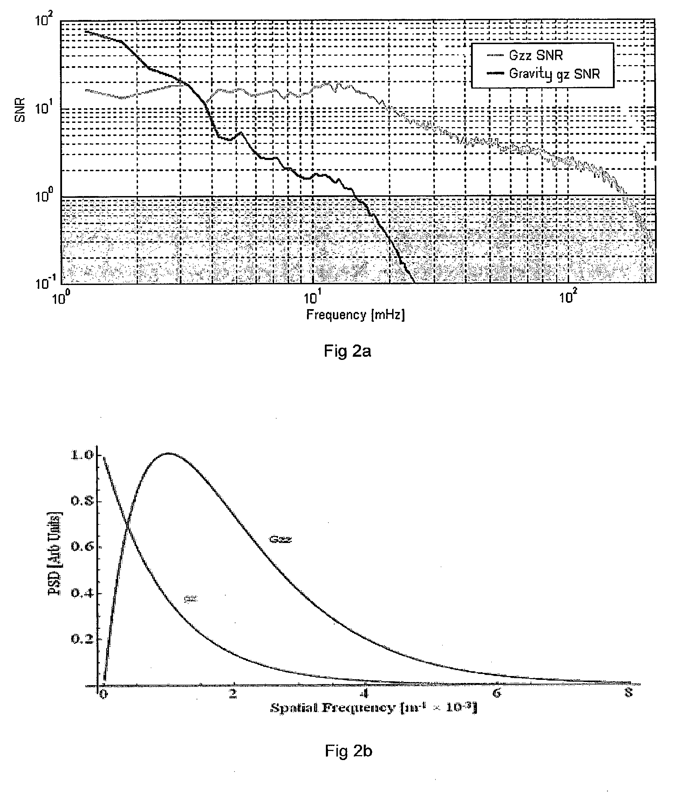

Figure 2a shows the signal to noise ratio (SNR) of actual survey measurements for both gravity data gz and gravity gradiometry data Gzz. The gravity gradiometry data Gzz is deduced from Full Tensor Gradiometer (FTG) measurements resulting in a white noise level of 8 E / √Hz. The gravity data gz is deduced from airborne gravity measurements limited by GPS derived acceleration errors. The greyed out area highlights where the SNR is less than one and the signal is essentially lost in the noise. At higher frequencies (i.e. above 10mHz) and thus at shorter wavelengths the gravimeter SNR deteriorates rapidly rendering the signals in this data with wavelengths less than 4 km unrecoverable. By contrast, the SNR for the gravity gradiometry does not deteriorate rapidly until after 100mHz. Current gradiometer technology in commercial use (the FTG), measuring gradients with increased power in the high frequencies, allows the recovery of much higher resolution data down to 350 m.

Nevertheless as shown in Figure 2b gravity data is also useful. Figure 2b shows that the signal power spectral density (PSD) continues to increase with wavelength for gravity data whereas the PSD dramatically drops off for gravity gradient data from a spatial frequency below approximately $10^{-3}$ $m^{-1}$.

The turn over point for the gravity gradient data, where the signal power starts to decrease with decreasing frequency occurs at longer wavelengths than initially expected from the impulse response function shown in Figure 2b.

The example data of Figure 2a shows that the Gzz SNR appears to go flat at low frequency for this geological signal. This maintenance of power is a result of the geological distribution of mass which tends to be correlated with a reddish spectrum therefore boosting the low frequency signal. For frequencies lower than those displayed in Figure 2a, the gravity gradient power will however start to decrease and follow the impulse response of Figure 2b. Nevertheless, for frequencies less than 3.5 mHz (equivalent to roughly 18 km), the gravity measurements start to offer greater SNR than the gravity gradient measurements.

To make optimum use of both sets of measurements, one should combine the long wavelength signals in the gravity measurements with the high bandwidth signals in the gravity gradient data. This will benefit regional style surveys (> 100 km in extent) most noticeably where there is more bandwidth over which the gravity data is superior to the gravity gradient. For smaller surveys, the SNR within the gravity gradient measurements alone is sufficient to accurately image the entire bandwidth.

Referring now to Figure 3 this shows an example of a procedure for implementing on a data processor which may, in embodiments, comprise a general purpose computer system, for processing data from a flight survey in accordance with the previously described techniques. Thus, at step S200 the procedure inputs the measured potential field data, e.g. from the gravity gradiometer and the gravimeter or from a combined instrument, together with other data, e.g. associated 3D position data. Optionally at step S200a, some pre-processing may be applied, for example to remove outliers and/or to select ranges of the data to be processed.

Because of the high level of acceleration noise that impinges on airborne gravimeters, the instruments tend to have an intrinsically low bandwidth to prevent saturation.

Further, due to the poor accuracy in which GPS derived acceleration corrections can be applied at high frequencies, the recorded data tends to be heavily time domain filtered ( > 50 seconds). When combining gravity measurements with essentially unfiltered gravity gradient measurements, proper account needs to be taken of this filtering otherwise the gravity measurements will downgrade the high-resolution information in the gradients.

At step S202, the data is combined using an equivalent source inversion that is augmented with information regarding the measurement filtering to generate an equivalent source model. In this scheme, the standard equivalent source minimisation is augmented with a function that filters the predictions from the equivalent source model in the time domain to match the filtering and bandwidth of the measurements,

$$\text{Minimise } \{ \, \| \, \textbf{Filter}[\text{Predictions}(\rho)] - \text{Measurements} \, \|_2 + \text{regularisation}(\rho) \, \} \qquad (1)$$

where Filter is a time domain filter matching the filtering and bandwidth of the measurements, $\rho$ is the density distribution of the equivalent source model which is to be solved to minimise the above functional and the fit measure is the standard least squares $L_2$ norm. Standard algorithmic methods can be applied to adjust the model parameters (i.e. the density distribution p) to achieve a minimum.

For the case of combining gravity and gravity gradient measurements, the filter ensures that the attenuated and distorted high frequencies in the gravity data do not compromise the more high-resolution gravity gradient data.

The equation also incorporates optional regularisation. With the correct choice of this regularisation and/or constraints, the resulting inversion can actually deconvolve the effect of the filtering and recreate bandwidth that was lost in the measurements.

After a successful inversion, at step S204, the model can be used to forward calculate gravity and gravity gradient components either back to the original measurement positions or at a series of new locations such as level grids for example. Such forward calculations proceed without the introduction of the filter matrices therefore providing the full bandwidth combination of all the measurement data. The forward calculated data may then be processed using any known technique, e.g. those taught in the applicant's earlier applications WO2007/012895, WO2007/085875, WO2008/093139, WO2009016348, WO2008117081 and PCT/GB2008/050041 which are herein incorporated by reference.

More details of the filter are provided for the case in which gravity and gravity gradient data is combined. The filter may be adapted as required to suit other types of data. The filter operates as a time domain convolution specifically for the pre-filtered gravity measurements. Representing (1) using matrix algebra results in

$$Minimise\left\{ \left( \begin{bmatrix} F \\ I \end{bmatrix} \left( \begin{bmatrix} A_g \\ A_{GG} \end{bmatrix} \rho \right) - \begin{bmatrix} m_g \\ m_{GG} \end{bmatrix} \right)^2 + \lambda^2 \left( R\rho - r \right)^2 \right\} \qquad (2).$$

Here the matrices have been partitioned vertically to show how the gravity, mg and gravity gradient, $m_{GG}$ measurements are handled differently. $A$g represents the superposition matrix of Green's function integrals that when multiplied by the source density vector $\rho$ generates the set of gravity predictions from the model. In a similar way, $A_{GG}$ $\rho$ gives the gravity gradient predictions.

$F$ is the filter convolution matrix that replicates the filtering already performed on the gravity measurements mg. This commonly takes the form of a low pass filter, i.e. a filter that passes low-frequency signals but attenuates signals with frequencies higher than the cutoff frequency. Each row of F contains the weights that average together the predicted measurements from the source model. The gravity gradient model predictions in (2) are not filtered in this case and accordingly, the identity matrix I leaves them unchanged. Thus, the inversion uses only low frequency gravity data and full range gravity gradient data.

If parts of the gravity gradient data spectrum are known to suffer from extraneous noise, then a filter could be designed to remove this noise from the measurements and subsequently be built into the inversion as another filter matrix in place of *I*. The noisy part of this spectrum would not then compromise the inversion and the missing bandwidth would be made up by the gravity data.

A set of weights generating the effect of an exponential low pass filter with characteristic time $T_c$ could be formed by the following

$$F_{i,j} = \frac{e^{-\left(t_{ij} / 0.5 T_c\right)n}}{\sum_j e^{-\left(t_{ij} / 0.5 T_c\right)n}} \tag{3}$$

where $t_{i,j}$ is the time between measurement points *i* and *j* and *n* is the filter order. For a first order filter (n = 1), above the cut-off frequency, the signal amplitude is reduced by a factor *e = 2.718* every time the frequency doubles. A second order frequency attenuates higher frequencies more steeply.

Regularization is standard in these inversion problems, depicted in (2) by the matrix R and the vector *r*, can take many forms and aims to stabilise and control the solution. Common choices include Tikhonov regularization where λ controls the relative amounts in which the solution fits the data and a priori information specified by *R* and *r* (see for example Gravity Interpretation Fundamentals and Application of Gravity Inversion and Geological Interpretation Jacoby W., Smilde P.L, 2009, Springer, Berlin). Other forms of regularisation can attempt to smoothen the density distribution in space by making the matrix *R* a gradient operator.

The gravity and gravity gradient data is inverted into the same model described by the vector of parameters $\rho$. The minimisation (2) can be achieved using standard optimisation algorithms such as the conjugate gradient method or Monte Carlo methods (see for example: Numerical Recipes in C, 2nd Edition, Press W.H., et. al. 1997, Cambridge University Press.)

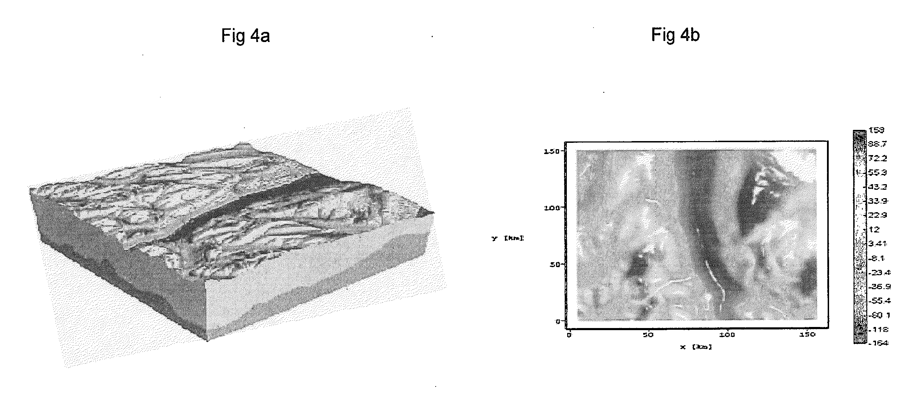

Figure 4a shows a synthetic model having dimensions 150 x 150 km which was constructed to illustrate the advantages of combining gravity and gravity gradient data for a large survey. The model includes an approximately 200 km feature in the data which peaks along the *y = x* diagonal. Forward calculations from this model to a set of survey lines spaced at 5 km were performed to simulate the gravity and gravity gradient signals that would be measured during a survey. Noise appropriate to the instrumentation and data correction errors were added and subsequent filtering applied to get as close as possible to realistic measurement data. The expected gravity measurements as predicted by these calculations are shown in Figure 4b.

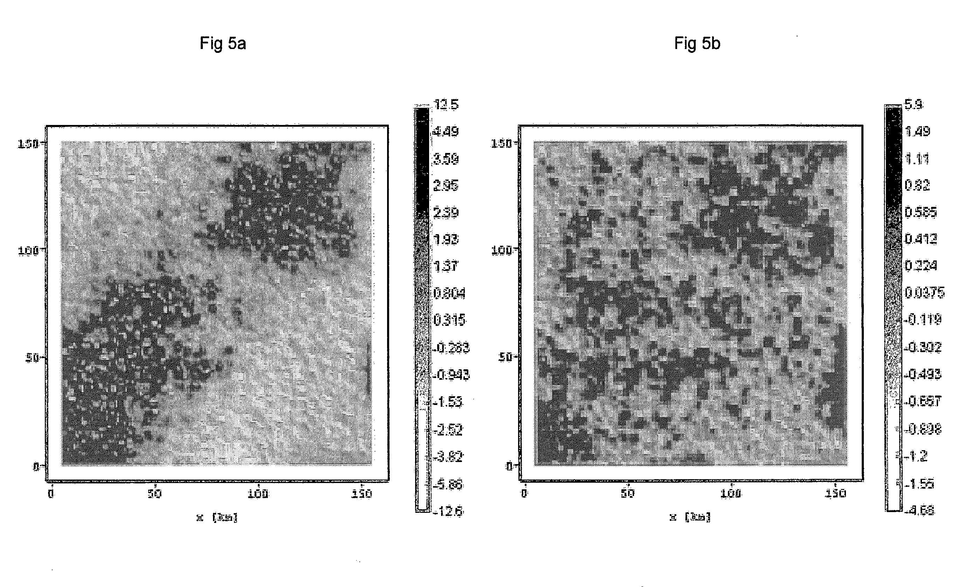

Figure 5a shows the results of using only the simulated gravity gradient measurements in an equivalent source inversion. The resulting error distribution in the predicted gravity distribution is shown in Figure 5a. Error plots of the predicted gravity gradient signals (not shown) reveal only small uncorrelated error distributions. The correlated nature of the gravity error highlights the deficiencies of accurate long wavelength signal in the gravity gradient measurements resulting in poor imaging of the 200 km feature peaking along the *y = x* diagonal.

Figure 5b shows the results of incorporating the simulated gravity measurements into the inversion and shows the resulting gravity error distribution. As shown, the error in the gravity becomes essentially uncorrelated and lower in amplitude showing the benefit of combining the data with the filter augmented inversion as described above. The predictions of the gravity gradient fields after incorporating the gravity data remain essentially unchanged showing that the high-resolution part of the inversion is not distorted by the filtered gravity measurements.

In summary, the signal to noise ratio provided by gravity gradiometer surveys is adequate to provide an accurate complete picture of the geological signal for moderately sized surveys supporting wavelengths up to approximately 200 km. For larger regional style surveys, the lack of gradient signal power at low frequencies starts to compromise the recovery of the long wavelength geological features. To recover this missing part of the spectrum, equivalent source inversions combining gravity gradient and gravity measurements are used in an optimum way to yield superior results giving an accurate signal over a wide bandwidth. To correctly invert measurement sets that have undergone significant time domain filtering, the equivalent source inversion is augmented with information about the filter. In this way the inversion fits the measurements without distorting the actual inversion model. Such a model can then be used to predict high resolution signals without the affects of filtering.

The gravity and gravity gradient data sets can derive from separate survey systems acquired at different times or simultaneously from within the same system. In the latter case, the gravimeter and gradiometer may be mounted on the same stabilised platform (as shown in figure 1). Alternatively, gravity data can also be provided by a suitable output channel of a gradiometer.

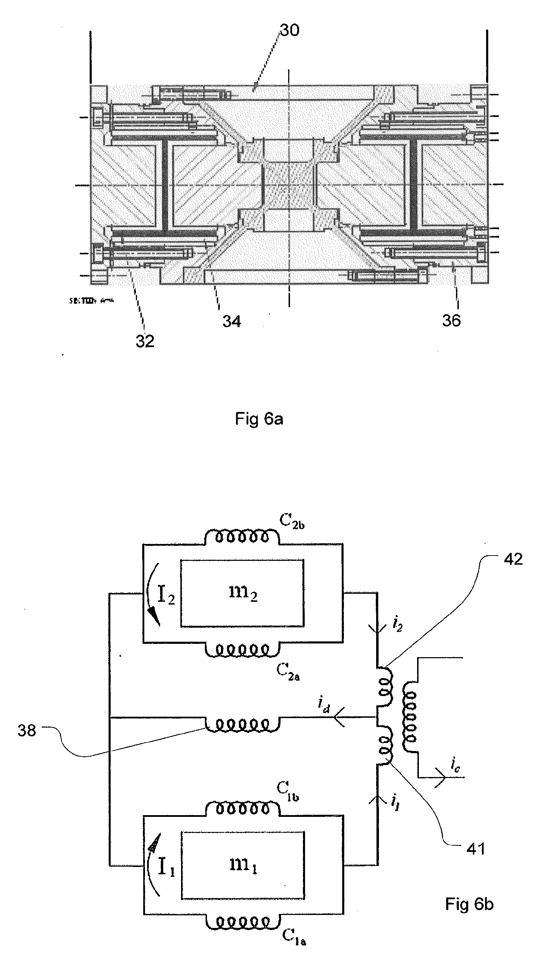

Figure 6a shows two facing accelerometer modules making up a gradiometer comprising a pair of proof masses 32 with coils mounted on coil supports 34 acting on surfaces of the proof masses 32. Niobium sensor modules 36 monitor movement of the proof masses. The accelerometer is mounted in a titanium mounting cube 30. Between two and six accelerometer modules may be used in a gradiometer. Figure 6a is taken from Lumley et. al., A superconducting gravity gradiometer tool for exploration (2004) ASEG-PESA Airborne Gravity Workshop, Sydney which describes the operation of the gradiometer in more detail and is here incorporated by reference.

As set out in the paper, it is necessary to consider what happens when the pancake coil-proof mass system is placed within a closed superconducting loop to understand the operation of the gradiometer. Understanding the operation is further complicated since there are two masses and two loops. Various schematic circuits are illustrated in the paper, with the preferred differential mode circuit shown in Figure 6. The gradiometer described in the paper is designed to utilise the illustrated differential mode circuit to measure the gravity gradient signal. As explained in more detail below, it is possible to adapt such a gradiometer which has a principle form of operation revolving around differencing two or more acceleration measurements taken over a defined baseline to provide a common mode output which is a measure of linear acceleration. For example, in the case of an inline Gzz gradiometer that measures the vertical acceleration experienced at two points separated vertically, taking the difference of the two measurements provides for the gravity gradient whereas the common mode sum corresponds to the vertical acceleration. After conventional gravity confections, processing, reduction and filtering, this common mode measurement provides the vertical gravity component. The differencing and summing stages are intrinsic to the gradiometer and are most effectively performed within suitably designed circuits that link the signals from each accelerometer module.

Figure 6b of the present application illustrates one such suitably designed circuit which may be used in the gradiometer described in the paper to provide both gravity gradient signals and gravity signals. In the schematic of Figure 6b there are two proof masses $m_1$ and $m_2$, each interacting with a pair of coils; ($C_{1a}$, $C_{1b}$) and ($C_{2a}$, $C_{2b}$)· A first inductor 38 is connected to a first sensor (not shown) to measure the current passing through the inductor 38. A second sensor (not shown) is incorporated to measure the current $i_c$ in an adjacent loop that couples to the main circuit through transformers 41 and 42. As explained in more detail below, the first sensor detects the gravity gradient and is operating in differential mode; the second sensor detects the gravity signal and is operating in common mode.

Both masses are supported by suspension structures which provide mass-on-spring type behaviour where the displacements of the proof masses are proportional to the total acceleration they experience. The proof masses and circuits are superconducting whereby persistent currents $I_1$ and $I_2$ can be stored and provide sensitivity to the proof mass displacements and thus their impinging accelerations. For example, if proof mass $m_1$ moves upwards towards coil $C_{1b}$, the inductance of coil $C_{1b}$ will decrease and the inductance of coil $C_{1a}$ will increase. By applying the rules of flux conservation in superconducting loops, (e.g. as described in Lumley *et. al.* (2004)), such a change in coil inductances will cause a redistribution of currents resulting in a signal current $i_1$ commensurable with the proof mass displacement.

If the gradiometer is subjected to a change in gravity, this causes displacements of both proof masses in the same direction. Flux quantisation for each superconducting loop requires both $i_1$ and $i_2$ to change in the same direction (ie with the sign convention used in Figure 6b, $di_2 = -di_1$) and thus there is no change in the current flowing through the central arm of the circuit containing inductor 38. Thus a sensor coupled to this inductor measures no current $i_d$ and does not see the common mode gravity signal. However, the response currents $i_1$ and $i_2$ both couple constructively through transformers 41 and 42 into the side loop forming a common mode current $i_c$.

In the presence of a gravity gradient, the gravitational acceleration at proof mass $m_1$ is different from that at proof mass $m_2$. In this case, the currents $i_1$ and $i_2$ change equally ($di_2 = di_1$) resulting in a net current flowing through the central arm of the circuit which may be termed a differential mode response current $i_d$.

By monitoring currents $i_c$ and $i_d$ one therefore has simultaneous measures of gravity and gravity gradient changes from within the same sensor.

**Claims**

1. A method of processing geophysical data including at least measured potential field data from a potential field survey of a surveyed region of the earth to provide a representation of the geology of said surveyed region, the method comprising:

inputting a first and a second set of measured potential field data wherein at least said first set of measured potential field data is filtered data; and
generating a model of said surveyed region by predicting a first set of data and a second set of data corresponding to said first and second sets of measured potential field data;
filtering said first set of predicted data in the time domain, wherein said filtering matches the filtering applied to the first set of measured data and comprises applying a weight to each element in the predicted data set and fitting said first set of filtered predicted data and said second set of predicted data to said first and second sets of measured data, respectively.

2. A method according to claim 1, wherein the second set of measured potential field data is filtered data and the generating step includes filtering said second set of predicted data and fitting said second set of filtered predicted data to said second set of measured data.

3. A method according to claim 1 or claim 2, wherein said second set of measured potential field data is gravity gradient data.

4. A method according to any preceding claim, wherein said first set of filtered measured potential field data is gravity data.

5. A method according to any preceding claim, comprising filtering the predicted data using a low pass filter.

6. A method according to claim 5, comprising filtering using a low pass filter having a cutoff frequency of approximately 3.5 mHz.

7. A method according to claim 2, comprising filtering the second set of predicted data in the time domain.

8. A method according to claim 7, comprising filtering by applying a weight to each element in the predicted data set.

9. A method according to any one of the preceding claims, comprising calculating the weight for each element based on a time characteristic of the filter and a time difference between measurement of a pair of elements in the data set.

10. A method according to any one of the preceding claims, comprising measuring the first and second sets of measured potential field data with separate measuring systems.

11. A method of prospecting for oil or a mineral from the earth, the method comprising conducting a potential field survey of a region, using the method of any one of claims 1 to 10 to process data from said potential field survey to generate a said three-dimensional representation of the underlying geology of the surveyed region, and locating said oil or mineral using said three-dimensional representation of said underlying geology.

12. A carrier carrying processor control code to, when running on a computer, cause said computer to implement the method of any preceding claim.

13. A system for processing geophysical data including at least potential field data from a potential field survey of a surveyed region of the earth to provide a representation of the geology of said surveyed region, the system comprising:

means for determining a first set of potential field data, wherein said means filters said first set of potential field data;
means for determining a second set of potential field data; and
a processor which is configured to:

receive said first and second sets of potential field data; and
generate a model of said surveyed region by

predicting a first set of data and a second set of data corresponding to said first and second sets of potential field data;

filtering said first set of predicted data in the time domain, wherein said filtering matches the filtering applied by the first measuring instrument to the first set of data and comprises applying a weight to each element in the predicted data set

and

fitting said first set of filtered predicted data and said second set of predicted data to said first and second sets of data, respectively.

14. A system according to claim 13, wherein said means for determining said first set of potential field data is a gradiometer for measuring gravity data and said means for determining said second set of potential field data is a gravimeter for measuring gravity gradient data.

15. A system according to claim 13, comprising an instrument which incorporates said means for determining said first set of potential field data and said means for determining said second set of potential field data.

**Patentansprüche**

1. Verfahren zum Verarbeiten von geophysikalischen Daten, die mindestens gemessene Potentialfelddaten von einer Potentialfeldvermessung eines vermessenen Gebiets der Erde einschließen, um eine Repräsentation der Geologie des vermessenen Gebiets bereitzustellen, wobei das Verfahren umfasst:

Eingeben eines ersten und eines zweiten Satzes von gemessenen Potentialfelddaten, worin mindestens der erste Satz von gemessenen Potentialfelddaten aus gefilterten Daten besteht; und

Erzeugen eines Modells des vermessenen Gebiets durch

Voraussagen eines ersten Satzes von Daten und eines zweiten Satzes von Daten, die dem ersten und dem zweiten Satz von gemessenen Potentialfelddaten entsprechen;

Filtern des ersten Satzes von vorausgesagten Daten in der Zeitdomäne, worin das Filtern mit dem Filtern übereinstimmt, das auf den ersten Satz von gemessenen Daten angewendet wird und das Anwenden eines Gewichts auf jedes Element in dem Satz von vorausgesagten Daten umfasst, und

Fitten des ersten Satzes von gefilterten vorausgesagten Daten und des zweiten Satzes von vorausgesagten Daten an den ersten bzw. zweiten Satz von gemessenen Daten.

2. Verfahren nach Anspruch 1, worin der zweite Satz von gemessenen Potentialfelddaten aus gefilterten Daten besteht und der Erzeugungsschritt das Filtern des zweiten Satzes von vorausgesagten Daten und das Fitten des zweiten Satzes von gefilterten vorausgesagten Daten an den zweiten Satz von gemessenen Daten einschließt.

3. Verfahren nach Anspruch 1 oder Anspruch 2, worin der zweite Satz von gemessenen Potentialfelddaten aus Gravitationsgradientendaten besteht.

4. Verfahren nach einem vorhergehenden Anspruch, worin der erste Satz von gefilterten gemessenen Potentialfelddaten aus Gravitationsdaten besteht.

5. Verfahren nach einem vorhergehenden Anspruch, das Filtern der vorausgesagten Daten unter Verwendung eines Tiefpassfilters umfassend.

6. Verfahren nach Anspruch 5, das Filtern unter Verwendung eines Tiefpassfilters mit einer Cutoff-Frequenz von ungefähr 3,5 mHz umfassend.

7. Verfahren nach Anspruch 2, das Filtern des zweiten Satzes von vorausgesagten Daten in der Zeitdomäne umfassend.

8. Verfahren nach Anspruch 7, das Filtern durch Anwenden eines Gewichts auf jedes Element im vorausgesagten Datensatz umfassend.

9. Verfahren nach einem der vorhergehenden Ansprüche, das Berechnen des Gewichts für jedes Element auf der Basis einer Zeitcharakteristik des Filters und einer Zeitdifferenz zwischen der Messung eines Paars von Elementen im Datensatz umfassend.

10. Verfahren nach einem der vorhergehenden Ansprüche, das Messen der ersten und zweiten Sätze von gemessenen Potentialfelddaten mit separaten Messsystemen umfassend.

11. Verfahren zum Prospektieren von Öl- oder einem Mineralvorkommen von der Erde aus, wobei das Verfahren das Durchführen einer Potentialfeldvermessung eines Gebiets unter Verwendung des Verfahrens nach einem der Ansprüche 1 bis 10 umfasst, um Daten aus der Potentialfeldvermessung zu verarbeiten, um eine solche dreidimensionale Repräsentation der unterlagernden Geologie des vermessenen Gebiets zu erzeugen, und das Lokalisieren des Öl- oder Mineralvorkommens unter Verwendung der dreidimensionalen Repräsentation der unterlagernden Geologie.

12. Träger, der Prozessorsteuercode trägt, um, wenn er auf einem Computer abläuft, den Computer veranlasst, das Verfahren nach einem vorhergehenden Anspruch zu implementieren.

13. System zum Verarbeiten von geophysikalischen Daten, die mindestens Potentialfelddaten aus einer Potentialfeldvermessung eines vermessenen Gebiets der Erde einschließen, um eine Repräsentation der Geologie des vermessenen Gebiets bereitzustellen, wobei das System umfasst:

ein Mittel zum Bestimmen eines ersten Satzes von Potentialfelddaten, worin das Mittel den ersten Satz von Potentialfelddaten filtert;
ein Mittel zum Bestimmen eines zweiten Satzes von Potentialfelddaten; und
einen Prozessor, konfiguriert zum:

Empfangen der ersten und zweiten Sätze von Potentialfelddaten; und
Erzeugen eines Modells des vermessenen Gebiets durch
Voraussagen eines ersten Datensatzes und eines zweiten Datensatzes, die dem ersten und dem zweiten Satz von Potentialfelddaten entsprechen;
Filtern des ersten Satzes von vorausgesagten Daten in der Zeitdomäne, worin das Filtern mit dem Filtern übereinstimmt, das durch das erste Messinstrument auf den ersten Datensatz angewendet wird, und das Anwenden eines Gewichts auf jedes Element im vorausgesagten Datensatz umfasst, und
Fitten des ersten Satzes von gefilterten vorausgesagten Daten und des zweiten Satzes von vorausgesagten Daten an den ersten bzw. zweiten Datensatz.

14. System nach Anspruch 13, worin das Mittel zum Bestimmen des ersten Satzes von Potentialfelddaten ein Neigungsmesser zum Messen von Gravitationsdaten ist und das Mittel zum Bestimmen des zweiten Satzes von Potentialfelddaten ein Gravimeter zum Messen von Gravitationsgradientendaten ist.

15. System nach Anspruch 13, ein Instrument umfassend, das das Mittel zum Bestimmen des ersten Satzes von Potentialfelddaten und das Mittel zum Bestimmen des zweiten Satzes von Potentialfelddaten enthält.


**Revendications**

1. Procédé de traitement de données géophysiques incluant au moins des données de terrain potentielles mesurées d'un levé de terrain potentiel d'une zone étudiée de la terre pour fournir une représentation de la géologie de ladite zone étudiée, le procédé comprenant les étapes ci-dessous consistant à :

appliquer des premier et second ensembles de données de terrain potentielles mesurées, dans lequel au moins ledit premier ensemble de données de terrain potentielles mesurées sont des données filtrées ; et
générer un modèle de ladite zone étudiée :

en prédisant un premier ensemble de données et un second ensemble de données correspondant auxdits premier et second ensembles de données de terrain potentielles mesurées ;
en filtrant ledit premier ensemble de données prédites dans le domaine temporel, dans lequel ledit filtrage correspond au filtrage appliqué au premier ensemble de données mesurées et comprend l'application d'une pondération à chaque élément dans l'ensemble de données prédites ; et
en adaptant ledit premier ensemble de données prédites filtrées et ledit second ensemble de données prédites auxdits premier et second ensembles de données mesurées, respectivement.

2. Procédé selon la revendication 1, dans lequel le second ensemble de données de terrain potentielles mesurées sont des données filtrées, et l'étape de génération inclut le filtrage dudit second ensemble de données prédites et l'adaptation du second ensemble de données prédites filtrées audit second ensemble de données mesurées.

3. Procédé selon la revendication 1 ou 2, dans lequel ledit second ensemble de données de terrain potentielles mesurées sont des données de gradient de pesanteur.

4. Procédé selon l'une quelconque des revendications précédentes, dans lequel ledit premier ensemble de données de terrain potentielles mesurées filtrées sont des données de pesanteur.

5. Procédé selon l'une quelconque des revendications précédentes, comprenant le filtrage des données prédites en utilisant un filtre passe-bas.

6. Procédé selon la revendication 5, comprenant une étape de filtrage au moyen d'un filtre passe-bas présentant une fréquence de coupure d'environ 3,5 mHz.

7. Procédé selon la revendication 2, comprenant le filtrage du second ensemble de données prédites dans le domaine temporel.

8. Procédé selon la revendication 7, comprenant un filtrage par l'application d'une pondération à chaque élément dans l'ensemble de données prédites.

9. Procédé selon l'une quelconque des revendications précédentes, comprenant le calcul de la pondération pour chaque élément sur la base d'une caractéristique temporelle du filtre et d'une différence de temps entre une mesure d'une paire d'éléments dans l'ensemble de données.

10. Procédé selon l'une quelconque des revendications précédentes, comprenant la mesure des premier et second ensembles de données de terrain potentielles mesurées avec des systèmes de mesure distincts.

11. Procédé de prospection pétrolière ou de matière minérale issue de la terre, le procédé comprenant la réalisation d'un levé de terrain potentiel d'une zone, en utilisant le procédé selon l'une quelconque des revendications 1 à 10 pour traiter des données provenant dudit levé de terrain potentiel en vue de générer une dite représentation tridimensionnelle de la géologie sous-jacente de la zone étudiée, et comprenant la localisation dudit pétrole ou de ladite matière minérale en utilisant ladite représentation tridimensionnelle de ladite géologie sous-jacente.

12. Support portant un code de commande de processeur pour, lorsqu'il est exécuté sur un ordinateur, amener ledit ordinateur à mettre en oeuvre le procédé selon l'une quelconque des revendications précédentes.

13. Système de traitement de données géophysiques incluant au moins des données de terrain potentielles provenant d'un levé de terrain potentiel d'une zone étudiée de la terre pour fournir une représentation de la géologie de ladite zone étudiée, le système comprenant :

un moyen pour déterminer un premier ensemble de données de terrain potentielles, dans lequel ledit moyen filtre ledit premier ensemble de données de terrain potentielles ;
un moyen pour déterminer un second ensemble de données de terrain potentielles ; et
un processeur qui est configuré de manière à :

recevoir lesdits premier et second ensembles de données de terrain potentielles ; et
générer un modèle de ladite zone étudiée :

en prédisant un premier ensemble de données et un second ensemble de données correspondant auxdits premier et second ensembles de données de terrain potentielles ;
en filtrant ledit premier ensemble de données prédites dans le domaine temporel, dans lequel ledit filtrage correspond au filtrage appliqué par le premier instrument de mesure au premier ensemble de données, et comprend l'application d'une pondération à chaque élément dans l'ensemble de données prédites ; et

en adaptant ledit premier ensemble de données prédites filtrées et ledit second ensemble de données prédites auxdits premier et second ensembles de données, respectivement.

**14.** Système selon la revendication 13, dans lequel ledit moyen pour déterminer ledit premier ensemble de données de terrain potentielles est un gradiomètre destiné à mesurer des données de pesanteur, et ledit moyen pour déterminer ledit second ensemble de données de terrain potentielles est un gravimètre destiné à mesurer des données de gradient de pesanteur.

**15.** Système selon la revendication 13, comprenant un instrument qui intègre ledit moyen pour déterminer ledit premier ensemble de données de terrain potentielles et ledit moyen pour déterminer ledit second ensemble de données de terrain potentielles.

Figure 1

Fig 2a

Fig 2b

**S200**
Input measured potential field data
of at least two types

**S200a**
Optional data pre-processing

**S202**
Generate equivalent source model
using filtering in time domain

**S204**
Forward calculate potential field data
using model in S202

Fig 3

Fig 4b

Fig 4a

Fig 5a

Fig 5b

EP 2 430 481 B1

Fig 6a

Fig 6b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007012895 A
- WO 2007085875 A
- WO 2008093139 A
- WO 2009016348 A
- WO 2008117081 A
- GB 2008050041 W

**Non-patent literature cited in the description**

- **LEE et al.** Effects of data filtering on inversion of gravity gradient data. *SEG 75th Annual Exposition and Annual Meeting,* 06 November 2005
- **R.J. BLAKELY.** Potential Theory in Gravity and Magnetic Applications. Cambridge University Press, 1995, 185
- **JACOBY W. ; SMILDE P.L.** Gravity Interpretation Fundamentals and Application of Gravity Inversion and Geological Interpretation. Springer, 2009
- Numerical Recipes. Cambridge University Press, 1997
- **LUMLEY.** A superconducting gravity gradiometer tool for exploration. *ASEG-PESA Airborne Gravity Workshop,* 2004